# FASCICULE DE BREVET EUROPEEN

(11) **EP 3 276 433 B1**
(45) Date de publication et mention de la délivrance du brevet: **15.05.2019**
(21) Numéro de dépôt: 16181143.5
(22) Date de dépôt: 26.07.2016
(51) Int. Cl.: G04B 37/00, F16B 21/04, A44C 9/00

(54) **SOUS-ENSEMBLE D'HABILLAGE POUR PIECE D'HORLOGERIE OU MONTRE OU BIJOU**
UNTEREINHEIT DES GEHÄUSES EINER UHR, ARMBANDUHR ODER EINES SCHMUCKSTÜCKS
CASING SUBASSEMBLY FOR A TIMEPIECE, WATCH OR JEWEL

(43) Date de publication de la demande: 31.01.2018
(73) Titulaire: Omega SA, 2502 Bienne (CH)
(72) Inventeur: Mollier, Adrien, 3274 Merzligen (CH)
(74) Mandataire: Giraud, Eric

(56) Documents cités:
- EP-A1- 1 079 284
- EP-A1- 2 476 335
- EP-A1- 2 537 431
- EP-A1- 2 806 314
- EP-A1- 2 874 022
- CH-A- 98 594
- CH-A1- 710 451
- CH-A2- 709 475
- DE-U1-202006 012 410
- DE-U1-202008 013 898
- FR-A1- 2 881 326
- GB-A- 1 396 574

## Description

### Domaine de l'invention

L'invention concerne un sous-ensemble, dit d'habillage, pour pièce d'horlogerie ou pour montre,
comportant un premier composant comportant des rebords saillant d'une première jupe alternés avec des premiers dégagements, et un deuxième composant comportant des ailes saillant d'une deuxième jupe alternées avec des deuxièmes dégagements, agencé pour occuper une première position démontée d'insertion dans laquelle ledit premier composant et ledit deuxième composant ont l'un par rapport à l'autre une première orientation angulaire, ou pour occuper une position assemblée et verrouillée dans laquelle ledit premier composant et ledit deuxième composant ont l'un par rapport à l'autre une deuxième orientation angulaire différente de ladite première orientation angulaire et sont maintenus axialement par un ajustement à baïonnette entre au moins deux dits rebords et au moins deux dites ailes.

L'invention concerne encore une pièce d'horlogerie, notamment une montre, comportant un tel sous-ensemble d'habillage.

L'invention concerne le domaine de l'habillage des montres.

### Arrière-plan de l'invention

L'habillage des montres et appareils similaires obéit à de nombreuses contraintes, en particulier d'étanchéité, de robustesse, d'aspect, et doit être réalisé de façon à prévenir tout démontage involontaire se traduisant irrémédiablement par une intervention d'après-vente pour échange de joints, nettoyage, lubrification, voire réparation.

Certains composants d'habillage ou de commande doivent, encore, être indexés angulairement les uns par rapport aux autres, pour des repérages de position de référence d'origine, de repos, ou d'actionnement, ou encore pour faciliter la lecture d'indications ou de graduations, ou pour assurer la continuité de surfaces gauches et/ou de décors. Cet indexage angulaire est souvent délicat à bien réaliser, en combinaison avec un bon serrage des composants et avec une étanchéité parfaite des joints.

Le document EP2476335A1 au nom de De Retz décrit un bijou avec deux corps latéraux annulaires, dont les diamètres sont supérieurs à un diamètre d'un corps central annulaire. L'un des corps latéraux est assemblé avec le corps central de façon amovible pour positionner et enlever des éléments décoratifs annulaires. Une unité de verrouillage magnétique, c'est-à-dire une dent, conserve les corps latéraux sur le corps central dans une position assemblée définie par une autre unité de verrouillage entre les corps latéraux et centraux, le long d'un degré de liberté. Cette dernière unité de verrouillage est constituée d'une unité en saillie, c'est-à-dire d'un filet, d'une partie saillante et d'une rainure pourvue d'une partie ouverte et d'une partie fermée.

Le document EP2537431A1 au nom de Aravelo Martin décrit un dispositif pour relier des éléments précieux à un anneau de doigt, comprenant un corps sensiblement annulaire à porter sur un doigt, et un support de gemme relié au corps annulaire dans une région supérieure. Le corps sensiblement annulaire comporte en un point de celui-ci une tête, qui est solidaire de celle-ci et est insérée et accouplée avec une partie inférieure du support de gemme par l'intermédiaire d'un couplage à baïonnette.

Les documents EP2874022 et CH709475 décrivent des montres dont le fond et la la boîte sont verrouillés par un couplage à baïonnette.

### Résumé de l'invention

L'invention se propose de réaliser un assemblage étanche et sécurisé de composants d'habillage avec un indexage angulaire parfait entre ces composants.

A cet effet, l'invention concerne un sous-ensemble d'habillage pour pièce d'horlogerie selon la revendication 1.

L'invention concerne encore une pièce d'horlogerie comportant un tel sous-ensemble d'habillage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, en perspective éclatée, une variante particulière d'un sous-ensemble d'habillage selon l'invention, comportant un premier composant qui est une carrure, sous laquelle est représenté un deuxième composant qui est un fond, comportant une flèche indiquant une direction d'indexage angulaire, et présenté pour sa fixation en mode baïonnette au premier composant,
- la figure 2 représente, de façon similaire à la figure 1, le même sous-ensemble après insertion en appui du deuxième composant sur le premier composant, dans une première orientation angulaire correspondant au libre passage de la baïonnette;
- la figure 3 représente, de façon similaire à la figure 2, le même sous-ensemble, dans une position fermée suite à fermeture complète de la baïonnette, après une rotation achevée par l'indexage angulaire relatif parfait du deuxième composant par rapport au premier composant, dans une deuxième position d'indexage ;
- la figure 4 est une vue partielle en perspective de ce sous-ensemble d'habillage, où le premier composant et le deuxième composant sont dans une position indexée stable grâce à un ergot de l'un, ici le fond, situé dans une zone déformable élastiquement au voisinage d'une fente, coopérant avec une butée que comporte l'autre, ici la carrure;
- la figure 5 est une vue similaire à la figure 4 d'une autre variante de sous-ensemble selon l'invention, où c'est la carrure qui comporte une telle zone déformable élastiquement comportant l'ergot;
- la figure 6 représente, de façon schématisée et en vue de dessous, une montre comportant un tel sous-ensemble dont une carrure constitue le premier composant, et un fond constitue le deuxième composant ;
- la figure 7 représente, de façon schématisée et en vue de dessus, une montre comportant un tel sous-ensemble dont une carrure constitue le premier composant, et une lunette constitue le deuxième composant ;
- la figure 8 représente, de façon schématisée et en vue de dessus, une montre comportant un tel sous-ensemble dont un tube fixé à une carrure constitue le premier composant, et une couronne constitue le deuxième composant.

### Description détaillée des modes de réalisation préférés

L'invention se propose de réaliser un assemblage étanche et sécurisé de composants d'habillage avec un indexage angulaire facile à régler, et ceci avec un nombre minimal de composants.

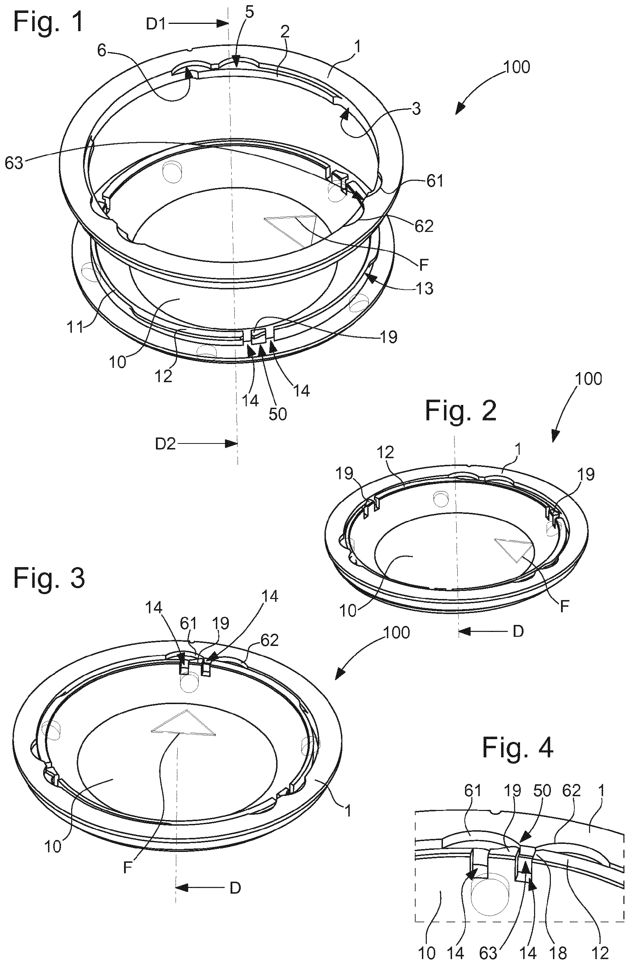

Les figures 1 à 5 illustrent l'exemple non limitatif de l'indexage angulaire d'un fond par rapport à une carrure de montre.

L'invention concerne un sous-ensemble d'habillage 100 pour une pièce d'horlogerie, et plus particulièrement pour une montre, ou pour un bijou qui ne fait pas partie de l'invention telle que revendiquée, comportant un premier composant 1 comportant des rebords 2 saillant d'une première jupe 6 alternés avec des premiers dégagements, et un deuxième composant 10 comportant des ailes 12 saillant d'une deuxième jupe 11 alternées avec des deuxièmes dégagements 13.

On utilise ici la dénomination générale « sous-ensemble d'habillage » aussi bien pour une pièce d'horlogerie que pour un bijou, même si ce terme est d'emploi courant en horlogerie seulement. On comprend que, dans le cas de la bijouterie, ce sous-ensemble peut concerner la structure du bijou, ou des éléments rapportés sur une structure de base, ou tout assemblage de plusieurs composants élémentaires ou pré-assemblés, voire le bijou tout entier.

Ce sous-ensemble d'habillage 100 est agencé pour passer d'une première position démontée d'insertion, à une deuxième position assemblée et verrouillée.

Dans une variante particulière, non limitative, comportant des moyens de répulsion agencés au niveau de l'interface entre le premier composant 1 et le deuxième composant 10, ces derniers tendent à être maintenus à distance l'un de l'autre par des moyens de répulsion, lesquels comportent des moyens de répulsion magnétique et/ou au moins un élément élastique et/ou au moins un joint d'étanchéité. Le passage de la première position démontée d'insertion à la deuxième position assemblée et verrouillée est effectué sous l'action d'efforts exercés par un opérateur: un effort axial pour surmonter l'effort résistant des moyens de répulsion et mettre au contact le premier composant 1 et le deuxième composant 10, et un couple pour les amener dans une position d'indexation angulaire et de butée.

Dans la première position démontée d'insertion, le premier composant 1 et le deuxième composant 10 ont l'un par rapport à l'autre une première orientation angulaire.

Dans une variante particulière, non limitative, comportant des moyens de répulsion agencés au niveau de l'interface entre le premier composant 1 et le deuxième composant 10, ces derniers tendent à être maintenus à distance l'un de l'autre par des moyens de répulsion, lesquels comportent des moyens de répulsion magnétique et/ou au moins un élément élastique et/ou au moins un joint d'étanchéité ergot ou bossage. Le passage de la première position démontée d'insertion à la deuxième position assemblée et verrouillée est effectué sous l'action d'efforts exercés par un opérateur: un effort axial pour surmonter l'effort résistant des moyens de répulsion et mettre au contact le premier composant 1 et le deuxième composant 10, et un couple pour les amener dans une position d'indexation angulaire et de butée.

Dans la deuxième position assemblée et verrouillée, le premier composant 1 et le deuxième composant 10 ont l'un par rapport à l'autre une deuxième orientation angulaire différente de la première orientation angulaire. Dans la variante particulière comportant des moyens de répulsion, le premier composant 1 et le deuxième composant 10 sont maintenus axialement à l'encontre de l'effort résistant exercé par ces moyens de répulsion, par l'effet d'un ajustement à baïonnette, réalisé par l'application des efforts axiaux et de couple imprimés par l'opérateur, entre au moins deux rebords 2 et au moins deux ailes 12.

Cette solidarisation du premier composant 1 et du deuxième composant 10, par ajustement à baïonnette, notamment autour d'une direction axiale D, est réversible, et autorise leur démontage. De façon propre à l'invention et en rupture avec l'art antérieur, ce démontage nécessite de la part d'un opérateur des efforts similaires à ceux exercés lors de l'assemblage, ce démontage nécessite de préférence l'utilisation d'un outil spécial, coopérant par exemple avec des trous ou des encoches périphériques, ou similaire, et ne peut être consécutif à une maladresse ni à l'exposition à des facteurs physiques externes particuliers.

Selon l'invention, au moins le premier composant 1 ou le deuxième composant 10 comporte au moins une zone 50 déformable élastiquement, radialement dans le cas des figures, dans un tel rebord 2 ou respectivement une telle aile 12. Et le sous-ensemble d'habillage 100 comporte au moins une zone 50 déformable élastiquement, radialement dans le cas des figures, comportant un ergot 19 qui est agencé pour coopérer, en indexage en position relatif entre les premier composant 1 et deuxième composant 10, avec une butée d'indexation angulaire et de blocage 63, 163, que comporte l'autre des premier composant 1 et deuxième composant 10.

Plus particulièrement, en ce qui concerne une variante non limitative comportant des moyens de répulsion, l'invention concerne un sous-ensemble d'habillage 100 pour pièce d'horlogerie ou montre, comportant au moins un joint d'étanchéité entre un premier composant 1 et un deuxième composant 10.

Plus particulièrement, et notamment dans les variantes illustrées par les figures, les rebords 12 du premier composant 1 sont sensiblement de révolution par rapport à une première direction axiale D1, et les ailes 12 du deuxième composant 10 sont sensiblement de révolution par rapport à une deuxième direction axiale D2. Ces ailes 12 sont saillantes radialement vers l'extérieur par rapport à la deuxième jupe 11, et sont d'amplitude angulaire inférieure ou égale à celle des premiers dégagements 3 au travers desquels peuvent s'insérer les ailes 12 lors d'un assemblage axial du premier composant 1 avec le deuxième composant 10 selon une direction axiale commune D selon laquelle sont alignées la première direction axiale D1 et la deuxième direction axiale D2. Le premier composant 1 ou le deuxième composant 10 comporte, au moins pour partie dans l'épaisseur de la première jupe 6 ou respectivement deuxième jupe 11, une telle zone déformable élastiquement radialement 50.

Plus particulièrement, au moins une zone 50 déformable élastiquement est agencée au voisinage d'au moins une fente d'élasticité 114, 14, que comporte un tel rebord 2 ou respectivement une telle aile 12.

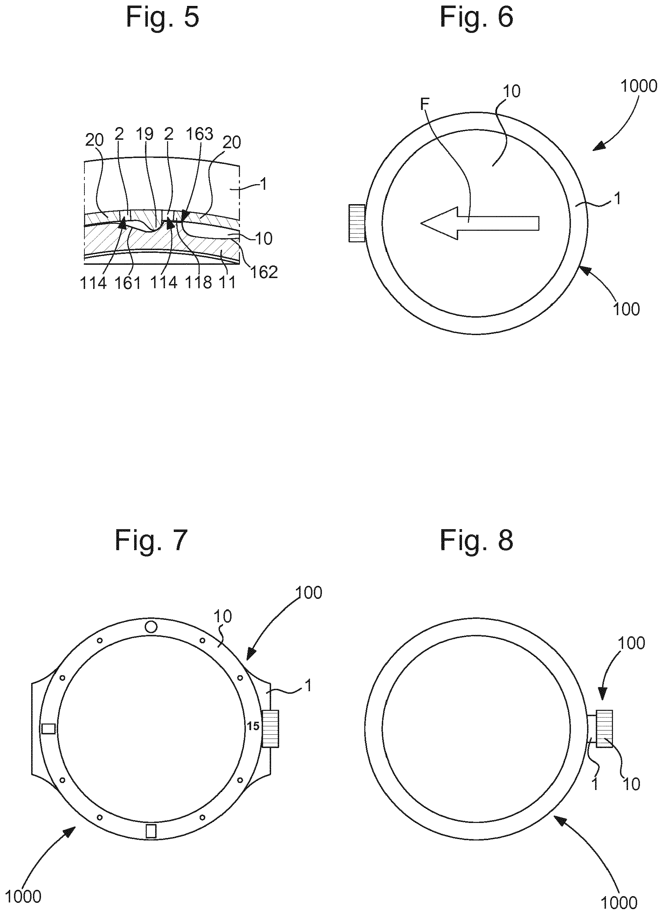

Plus particulièrement encore, la zone déformable élastiquement 50 est agencée au voisinage d'au moins une fente d'élasticité 114, 14, dans la partie saillante d'un rebord 2 ou respectivement d'une aile 12. Dans la réalisation particulière visible aux figures 4 ou 5, cette zone 50 est délimitée par deux telles fentes parallèles 14 ou 114 selon le cas.

Plus particulièrement l'ergot 19 est saillant depuis un rebord 2 ou une aile 12. Dans la variante de la figure 5, le rebord 2 porte une jupe externe 20, sensiblement de révolution autour de la première direction axiale D1, qui porte l'ergot 19.

Dans les réalisations particulières et non limitatives des figures 1 à 5, la butée 63, 163, est délimité par des alvéoles 61 et 62, 161 et 162, notamment exécutées par fraisage, ou par injection, ou autre, le profil de ces alvéoles étant assez simple (ici un simple secteur cylindrique creux) pour être réalisé par tout moyen. Avantageusement, une telle butée 63, 163, est pincée entre, d'un premier côté l'ergot 19, et d'un deuxième côté une extrémité 18, 118, que comporte une partie rebord 2 ou une aile 12 ou du rebord 2, selon le cas, qui est plus rigide que la zone déformable élastiquement 50.

Dans une application avantageuse, non limitative, illustrée par les figures 1 à 6, le premier composant 1 est une carrure et le deuxième composant 10 est un fond. En somme, dans la variante illustrée par les figures 1 à 4, le fond 10 comporte au moins une jupe 11 fendue, qui porte un ou plusieurs ergots 19 pour permettre l'indexation et le blocage sur la carrure 1. Cette carrure 1 possède avantageusement une géométrie obtenue par fraisage, qui vient se prendre dans le ou les ergots 19 du fond 10, et bloquer le système en position indexée. Ce clipage radial est fiable, et économique. Une réouverture accidentelle n'est pas possible, car le profil de l'alvéole 61 comporte avantageusement une partie à forte pente, qui nécessite l'application d'un couple de desserrage important, appliqué à l'aide d'un outil, pour autoriser la réouverture du fond, qui est ainsi impossible à l'utilisateur, et réservée au personnel de maintenance et d'après-vente. Dans ce cas de figure, dans une variante particulière, la présence d'au moins un joint d'étanchéité est requise. Dans une variante non illustrée, le premier composant 1 est un fond et le deuxième composant 10 est une pièce d'aspect, telle qu'un médaillon, ou similaire, rapportée sur ce fond, auquel cas un joint entre eux n'est pas nécessaire, et la présence d'un ressort pouvant parfaitement suffire dans une variante comportant des moyens de répulsion.

On note, à ce propos, que l'invention peut être mise en oeuvre sans de tels moyens de répulsion, notamment pour des applications d'habillage ou similaire.

Bien sûr, il est possible de réaliser le premier composant et le deuxième composant comportant chacun une zone déformable élastiquement, toutefois la réalisation illustrée où un seul des composants comporte une zone déformable élastiquement est la moins coûteuse à produire.

Si la compression axiale du joint d'étanchéité est la plus classique, l'invention permet aussi sans difficulté un assemblage avec compression radiale d'un tel joint.

On comprend que l'invention est illustrée ici dans une variante particulière, avec des rebords et des ailes saillant radialement. L'invention est aussi applicable à d'autres variantes où les configurations axiale et radiale sont inversées.

Dans une autre application, le premier composant 1 est une carrure et le deuxième composant 10 est un réhaut ou une lunette, tel que visible sur la figure 7.

Ce cas convient bien à une variante dans laquelle un premier composant et un deuxième composant tendent à être éloignés l'un de l'autre, par répulsion magnétique ou encore par un élément élastique tel qu'un jonc, c'est-à-dire une bague mince, non nécessairement fermée, ou plus particulièrement un jonc comportant des segments analogues à un rochet pour n'autoriser facilement qu'une manoeuvre unidirectionnelle, comme dans le cas particulier d'utilisation de l'invention pour une lunette unidirectionnelle. Un tel jonc peut être filiforme, de section sensiblement ronde, ou bien à section rectangulaire, ou autre.

Dans une autre application encore, le premier composant 1 est une carrure ou un tube rapporté sur une carrure, et le deuxième composant 10 est une couronne, tel que visible sur la figure 8. Dans une variante, le deuxième composant 10 est une tige de couronne ou un poussoir. Dans ces cas de figure aussi, la présence d'au moins un joint d'étanchéité est obligatoire.

L'invention est apte à de nombreuses applications en horlogerie, par exemple pour une valve hélium sur une montre de plongée, ou encore pour des composants d'habillage tels qu'un bracelet, une boucle, un fermoir, ou autre. Il en est de même en bijouterie, pour effectuer la fermeture de boutons de manchette, de boucles d'oreilles, ou encore pour fixer des pierreries ou des éléments décorés conçus de manière amovible.

L'invention concerne encore une pièce d'horlogerie, notamment une montre 1000, comportant un tel sous-ensemble d'habillage 100.

L'invention concerne encore un bijou comportant un tel sous-ensemble 100.

L'invention permet, ainsi, de prévenir tout démontage inopiné et involontaire du sous-ensemble 100, par exemple sous l'effet de vibrations, de cycles de dilatation successifs, par une utilisation malencontreuse de l'utilisateur, ou autre.

L'invention permet d'assurer l'orientation parfaite d'un composant maintenu bloqué dans sa position de service.

L'invention autorise, encore, la mise en coopération de composants antagonistes réalisés en matières de différentes natures, sans contrainte de dilatation frottement, élasticité, ou autre, sans nécessiter d'élément de fixation extérieur tel que vis ou similaire, sans pas de vis ni usinage risquant de fragiliser des matières particulières telles que céramiques, saphir, et similaires. Elle présente une très bonne résistance à un dévissage accidentel ou même volontaire par vibration ou du type Chapuis-chocs.

L'invention permet aussi d'assurer l'interchangeabilité des composants, et, par conséquent, une personnalisation accrue des montres ou des bijoux des utilisateurs.

Cette invention est applicable aussi bien à des montres ou bijoux réalisés en matériaux précieux qu'à des réalisations de grande série comportant des composants de faible coût unitaire, notamment en matière plastique ou similaire.

L'invention se prête bien aux cas où le sous-ensemble 100 comporte des composants 1 et 10 réalisés dans des matériaux différents, avec des coefficients de dilatation différents, ou encore des matières fragiles, ou dures (céramique, saphir, pierres précieuses, gemmes, camées), qui n'autorisent pas des modes de fixation standard. Citons parmi des configurations classiques l'assemblage d'une carrure en or avec un fond saphir, ou encore une boîte entièrement en céramique, une combinaison métal-céramique, ou similaires. Les composants 1 et 10 peuvent ainsi être réalisés en toutes sortes de matériaux : alliages métalliques, notamment précieux ou titrés, aciers inoxydables, alliages métalliques au moins partiellement amorphe, ou « Liquidmetal© » ou similaire, céramiques, saphir, minéraux, pierres dures, caoutchouc, matières plastiques et notamment élastomères thermoplastiques dits TPE dont notamment polyuréthane thermoplastique dit TPU, polycarbonates dits PC, chlorures de polyvinyle dits PVC, polyacétals ou polyoxyméthylène dit POM, silicone, « Nylon® », pour ne citer, non limitativement, que des matériaux usuels en construction horlogère et en bijouterie-joaillerie.

## Revendications

1. Sous-ensemble d'habillage (100) de pièce d'horlogerie ou de montre, comportant un premier composant (1) comportant des rebords (2) saillant d'une première jupe (6) alternés avec des premiers dégagements (3), et un deuxième composant (10) comportant des ailes (12) saillant d'une deuxième jupe (11) alternées avec des deuxièmes dégagements (13), agencé pour occuper une première position démontée d'insertion dans laquelle ledit premier composant (1) et ledit deuxième composant (10) ont l'un par rapport à l'autre une première orientation angulaire, ou pour occuper une deuxième position assemblée et verrouillée dans laquelle ledit premier composant (1) et ledit deuxième composant (10) ont l'un par rapport à l'autre une deuxième orientation angulaire différente de ladite première orientation angulaire et sont maintenus axialement par un ajustement à baïonnette entre au moins deux dits rebords (2) et au moins deux dites ailes (12), **caractérisé en ce que** au moins ledit premier composant (1) ou ledit deuxième composant (10) comporte, au moins pour partie dans l'épaisseur de ladite première jupe (6) ou respectivement deuxième jupe (11), au moins une zone (50) déformable élastiquement comportant un ergot (19) agencé pour coopérer, en indexage en position relatif entre lesdits premier composant (1) et deuxième composant (10), avec une butée d'indexation angulaire et de blocage (63, 163) que comporte l'autre desdits premier composant (1) et deuxième composant (10), et **caractérisé en ce que**, dans ladite première position démontée d'insertion, ledit premier composant (1) et ledit deuxième composant (10) ont l'un par rapport à l'autre une première orientation angulaire, et sont maintenus à distance l'un de l'autre par des moyens de répulsion, lesquels comportent des moyens de répulsion magnétique et/ou au moins un élément élastique et/ou au moins un joint d'étanchéité, et **en ce que**, dans ladite deuxième position assemblée et verrouillée ledit premier composant (1) et ledit deuxième composant (10) sont maintenus axialement à l'encontre d'un effort résistant exercé par lesdits moyens de répulsion.

2. Sous-ensemble d'habillage (100) selon la revendication 1, **caractérisé en ce que** lesdits moyens de répulsion comportent au moins un dit joint d'étanchéité.

3. Sous-ensemble d'habillage (100) selon la revendication 2, **caractérisé en ce que** lesdits moyens de répulsion comportent au moins un dit joint d'étanchéité, **en ce que** lesdits rebords (2) saillent radialement vers l'intérieur de ladite première jupe (6), lesdites ailes (12) saillent radialement vers l'extérieur de ladite deuxième jupe (11), et **en ce que** ladite zone (50) est déformable élastiquement radialement.

4. Sous-ensemble d'habillage (100), selon l'une des revendications 1 à 3, **caractérisé en ce que** ledit premier composant (1) comporte, sensiblement de révolution par rapport à une première direction axiale (D1), des dits rebords (2) saillant radialement vers l'intérieur de ladite première jupe (6) en alternance par rapport à des dits premiers dégagements (3), et ledit deuxième composant (10) comporte, sensiblement de révolution par rapport à une deuxième direction axiale (D2), des dites ailes (12) saillantes radialement vers l'extérieur par rapport à ladite deuxième jupe (11) et d'amplitude angulaire inférieure ou égale à celle desdits premiers dégagements (3) au travers desquels peuvent s'insérer lesdites ailes (12) lors d'un assemblage axial dudit premier composant (1) avec ledit deuxième composant (10) selon une direction axiale commune (D) selon laquelle sont alignées ladite première direction axiale (D1) et ladite deuxième direction axiale (D2), et **en ce que** au moins ledit premier composant (1) ou ledit deuxième composant (10) comporte, au moins pour partie dans l'épaisseur de ladite première jupe (6) ou respectivement deuxième jupe (11), une dite zone déformable élastiquement radialement (50).

5. Sous-ensemble d'habillage (100) selon l'une des revendications 1 à 4, **caractérisé en ce que** au moins une zone déformable élastiquement (50) est agencée au voisinage d'au moins une fente d'élasticité (114, 14) d'un dit rebord (2) ou respectivement d'une dite aile (12).

6. Sous-ensemble d'habillage (100) selon la revendication 5, **caractérisé en ce que** ladite zone déformable élastiquement (50) est agencée au voisinage d'au moins une fente d'élasticité (114, 14) dans la partie saillante d'un dit rebord (2) ou respectivement d'une dite aile (12).

7. Sous-ensemble d'habillage (100) selon l'une des revendications 1 à 6, **caractérisé en ce que** ledit premier composant (1) est une carrure et ledit deuxième composant (10) est un fond.

8. Sous-ensemble d'habillage (100) selon l'une des revendications 1 à 6, **caractérisé en ce que** ledit premier composant (1) est une carrure et ledit deuxième composant (10) est un réhaut ou une lunette.

9. Sous-ensemble d'habillage (100) selon l'une des revendications 1 à 6, **caractérisé en ce que** ledit premier composant (1) est une carrure ou un tube rapporté sur une carrure, et ledit deuxième composant (10) est une couronne.

10. Montre (1000) comportant un sous-ensemble d'habillage (100) selon l'une des revendications 1 à 9.

## Patentansprüche

1. Untereinheit des Gehäuses (100) einer Uhr oder Armbanduhr, umfassend eine erste Komponente (1), die von einer ersten Schürze (6) vorstehende Ränder (2) aufweist, die mit ersten Abständen (3) wechseln, und eine zweite Komponente (10), die von einer zweiten Schürze (11) vorstehende Seitenteile (12) aufweist, die mit zweiten Abständen (13) wechseln, und dafür ausgelegt ist, eine erste Ausbau-Einbau-Position einzunehmen, in der die erste Komponente (1) und die zweite Komponente (10) relativ zueinander eine erste Winkelorientierung besitzen, oder eine zweite montierte und verriegelte Position einzunehmen, in der die erste Komponente (1) und die zweite Komponente (10) relativ zueinander eine von der ersten Winkelorientierung verschiedene zweite Winkelorientierung besitzen und durch eine Bajonetteinstellung zwischen mindestens zwei der Ränder (2) und mindestens zwei der Seitenteile (12) axial gehalten werden, **dadurch gekennzeichnet, dass** mindestens die erste Komponente (1) oder die zweite Komponente (10) mindestens auf einem Teil der Dicke der ersten Schürze (6) bzw. der zweiten Schürze (11) mindestens einen elastisch verformbaren Bereich (50) aufweist, der eine Nase (19) aufweist, die dafür ausgelegt ist, beim Indexieren in der relativen Position zwischen der ersten Komponente (1) und der zweiten Komponente (10) mit einem Winkelindexierungs- und Blockieranschlag (63, 163) zusammenzuwirken, den die andere der ersten Komponente (1) und der zweiten Komponente (10) aufweist, und **dadurch gekennzeichnet, dass** in der ersten Ausbau-Einbau-Position die erste Komponente (1) und die zweite Komponente (10) relativ zueinander eine erste Winkelorientierung besitzen und durch Abstoßungsmittel auf Abstand zueinander gehalten werden, wobei die Abstoßungsmittel magnetische Abstoßungsmittel und/oder mindestens ein elastisches Element und/oder mindestens eine Dichtung aufweisen, und dass in der montierten und verriegelten Position die erste Komponente (1) und die zweite Komponente (10) entgegen einer Widerstandskraft, die durch die Abstoßungsmittel ausgeübt wird, axial gehalten werden.

2. Untereinheit des Gehäuses (100) nach Anspruch 1, **dadurch gekennzeichnet, dass** die Abstoßungsmittel mindestens eine Dichtung umfassen.

3. Untereinheit des Gehäuses (100) nach Anspruch 2, **dadurch gekennzeichnet, dass** die Abstoßungsmittel mindestens eine Dichtung umfassen, dass die Ränder (2) radial nach innen von der ersten Schürze (6) vorstehen und die Seitenteile (12) radial nach außen von der zweiten Schürze (11) vorstehen und dass der Bereich (50) radial elastisch verformbar ist.

4. Untereinheit des Gehäuses (100) nach einem der Ansprüche 1 bis 3, **dadurch gekennzeichnet, dass** die erste Komponente (1) im Wesentlichen rotationssymmetrisch in Bezug auf eine erste axiale Richtung (D1) Ränder (2) aufweist, die von der ersten Schürze (6) radial nach innen vorstehen und mit ersten Abständen (3) wechseln, und die zweite Komponente (10) im Wesentlichen rotationssymmetrisch um eine zweite axiale Richtung (D2) Seitenteile (12) aufweist, die von der zweiten Schürze (11) radial nach außen vorstehen und eine Winkelamplitude kleiner oder gleich jener der ersten Abstände (3) besitzen, durch die hindurch die Seitenteile (12) bei der axialen Montage der ersten Komponente (1) mit der zweiten Komponente (10) längs einer gemeinsamen axialen Richtung (D), auf die die erste axiale Richtung (D1) und die zweite axiale Richtung (D2) ausgerichtet sind, einsetzbar sind, und dass mindestens die erste Komponente (1) oder die zweite Komponente (10) mindestens auf einem Teil der Dicke der ersten Schürze (6) bzw. der zweiten Schürze (11) einen radial elastisch verformbaren Bereich (50) aufweist.

5. Untereinheit des Gehäuses (100) nach einem der Ansprüche 1 bis 4, **dadurch gekennzeichnet, dass** mindestens ein elastisch verformbarer Bereich (50) in der Nähe mindestens eines elastischen Schlitzes (114, 4) eines Randes (2) bzw. eines Seitenteiles (12) angeordnet ist.

6. Untereinheit des Gehäuses (100) nach Anspruch 5, **dadurch gekennzeichnet, dass** der elastisch verformbare Bereich (50) in der Nähe mindestens eines elastischen Schlitzes (114, 4) in dem vorstehenden Teil eines Randes (2) bzw. eines Seitenteils (12) angeordnet ist.

7. Untereinheit des Gehäuses (100) nach einem der Ansprüche 1 bis 6, **dadurch gekennzeichnet, dass** die erste Komponente (1) ein Gehäusemittelteil ist und die zweite Komponente (10) ein Boden ist.

8. Untereinheit des Gehäuses (100) nach einem der Ansprüche 1 bis 6, **dadurch gekennzeichnet, dass** die erste Komponente (1) ein Gehäusemittelteil ist und die zweite Komponente (10) ein Höhenring oder eine Lünette ist.

9. Untereinheit des Gehäuses (100) nach einem der Ansprüche 1 bis 6, **dadurch gekennzeichnet, dass** die erste Komponente (1) ein Gehäusemittelteil oder ein an ein Gehäusemittelteil befestigtes Rohr ist und die zweite Komponente (10) eine Krone ist.

10. Uhr (1000), umfassend eine Untereinheit des Gehäuses (100) nach einem der Ansprüche 1 bis 9.

## Claims

1. Sub-assembly of external parts (100) for a timepiece or watch, comprising a first component (1) comprising edges (2) which project from a first skirt (6), alternating with first undercuts (3), and a second component (10) comprising wings (12) which project from a second skirt (11), alternating with second undercuts (13), provided to occupy a first dismantled position for insertion in which said first component (1) and said second component (10) have, one relative to the other, a first angular orientation or to occupy a second assembled and locked position in which said first component (1) and said second component (10) have, one relative to the other, a second angular orientation different from said first angular orientation and are retained axially by a bayonet fit between at least two said edges (2) and at least two said wings (12), **characterised in that** at least said first component (1) or said second component (10) comprises, at least in part in the thickness of said first skirt (6) or respectively second skirt (11), at least one elastically deformable zone (50) comprising a lug (19) which is provided to cooperate, by indexing in a relative position between said first component (1) and second component (10), with a limit stop for angular indexation and locking (63, 163), which the other of said first component (1) and second component (10) comprises, and **characterised in that**, in said first dismantled position for insertion, said first component (1) and said second component (10) have, one relative to the other, a first angular orientation, and are retained at a distance, one from the other, by repulsion means, which comprise magnetic repulsion means and/or at least one elastic element and/or at least one sealing joint, and **in that**, in said second assembled and locked position, said first component (1) and said second component (10) are retained axially counter to the resistant force exerted by said repulsion means.

2. Sub-assembly of external parts (100) according to claim 1, **characterised in that** said repulsion means comprise at least one sealing joint.

3. Sub-assembly of external parts (100) according to claim 2, **characterised in that** said repulsion means comprise at least one sealing joint, **in that** said edges (2) project radially towards the inside of said first skirt (6), said wings (12) project radially towards the outside of said second skirt (11) and **in that** said zone (50) is radially elastically deformable.

4. Sub-assembly of external parts (100) according to any of claims 1 to 3, **characterised in that** said first component (1) comprises, substantially of revolution relative to a first axial direction (D1), said edges (2) which project radially towards the inside of said first skirt (6), alternating with said first undercuts (3), and said second component (10) comprises, substantially of revolution relative to a second axial direction (D2), said wings (12) which project radially towards the outside relative to said second skirt (11), and of an angular amplitude less than or equal to that of said first undercuts (3) through which said wings (12) can be inserted during axial assembly of said first component (1) with said second component (10), according to a common axial direction (D) according to which said first axial direction (D1) and said second axial direction (D2) are aligned, and **in that** at least said first component (1) or said second component (10) comprises, at least in part in the thickness of said first skirt (6) or respectively second skirt (11), a said radially elastically deformable zone (50).

5. Sub-assembly of external parts (100) to any of claims 1 to 4, **characterised in that** at least one elastically deformable zone (50) is provided in the vicinity of at least one elastic slot (114, 14) of a said edge (2) or respectively or of a said wing (12).

6. Sub-assembly of external parts (100) according to claim 5, **characterised in that** said elastically deformable zone (50) is provided in the vicinity of at least one elastic slot (114, 14), in the projecting part of a said edge (2) or respectively of a said wing (12).

7. Sub-assembly of external parts (100) according to any of claims 1 to 6, **characterised in that** said first component (1) is a middle and said second component (10) is a back cover.

8. Sub-assembly of external parts (100) according to any of claims 1 to 6, **characterised in that** said first component (1) is a middle and said second component (10) is a flange or a bezel.

9. Sub-assembly of external parts (100) according to any of claims 1 to 6, **characterised in that** said first component (1) is a middle or a tube connected to a middle, and said second component (10) is a crown.

10. Watch (1000) comprising a sub-assembly of external parts (100) according to any of claims 1 to 9.
